# EUROPÄISCHE PATENTSCHRIFT

(11) **EP 3 170 602 B1**
(45) Veröffentlichungstag und Bekanntmachung des Hinweises auf die Patenterteilung: **27.12.2017**
(21) Anmeldenummer: 15195388.2
(22) Anmeldetag: 19.11.2015
(51) Int. Cl.: B23G 5/06, B23G 7/02

(54) **GEWINDEFORMER ODER -BOHRER UND VERFAHREN ZUR HERSTELLUNG EINES GEWINDEFORMERS ODER -BOHRERS**
THREAD FORMER OR TAP AND METHOD FOR PRODUCING A THREAD FORMER OR TAP
DISPOSITIF DE MOULAGE OU DE TARAUDAGE DE FILETS ET PROCÉDÉ DE FABRICATION D'UN DISPOSITIF DE MOULAGE OU DE TARAUDAGE DE FILETS

(43) Veröffentlichungstag der Anmeldung: 24.05.2017
(73) Patentinhaber: LMT Fette Werkzeugtechnik GmbH & Co. KG, 21493 Schwarzenbek (DE)
(72) Erfinder: KRETZSCHMANN, Uwe, 21493 Schwarzenbek (DE); IMMICH, Philipp, 24576 Bad Bramstedt (DE); SCHUNK, Uwe, 23554 Lübeck (DE); VON GARREL, Christian, 22844 Norderstedt (DE)
(74) Vertreter: Hauck Patentanwaltspartnerschaft mbB

(56) Entgegenhaltungen:
- WO-A1-2016/045681
- DE-A1- 3 934 621
- US-A1- 2012 103 701
- US-A1- 2014 087 210
- US-A1- 2015 283 642
- US-A1- 2015 298 220

## Beschreibung

Die Erfindung betrifft einen Gewindeformer oder -bohrer, umfassend einen Schaftkörper, der an seinem einen Ende einen Einspannabschnitt und an seinem anderen Ende einen Profilkörper zum Formen oder Schneiden eines Gewindes aufweist. Die Erfindung betrifft außerdem ein Verfahren zur Herstellung eines solchen Gewindeformers oder -bohrers.

Aus EP 1 409 185 B2 ist ein Gewindeformer oder -bohrer bekannt, bei dem ein Profilkörper an einem separat ausgebildeten Schaft zentrisch und unverdrehbar befestigbar ist. Vorteilhaft bei einem solchen Gewindeformer oder -bohrer ist unter anderem, dass der Profilkörper aus einem härteren Material hergestellt werden kann als der Schaft. Dennoch ist es nicht zuletzt unter Kostengesichtspunkten aufwendig, den gesamten Profilkörper aus einem besonders verschleißfesten Material zu bilden. Aus DE 39 34 621 A1 ist ein Gewindeformer bekannt, bei dem die besonders auf Verschleiß beanspruchten Bereiche von Gewindefurchen aus in axialen Nuten eingelöteten Leisten aus einem besonders harten und verschleißfesten Werkstoff gebildet werden. Damit soll die Standzeit des Werkzeuges ohne nennenswerten Verlust der mechanischen Belastbarkeit erhöht werden.

Das Einlöten der Leisten ist allerdings herstellungstechnisch aufwendig und birgt die Gefahr eines Ablösens der Leisten im Betrieb. Außerdem bestehen für unterschiedliche Bereiche des Profilkörpers eines solchen Gewindeformers oder - bohrers im Betrieb unterschiedliche Anforderungen, die durch Auflöten von Leisten auf bestimmte Bereiche des Profilkörpers nicht immer erfüllt werden können.

Ausgehend von dem erläuterten Stand der Technik liegt der Erfindung daher die Aufgabe zugrunde, einen Gewindeformer oder -bohrer und ein Verfahren zur Herstellung eines solchen Gewindeformers oder -bohrers anzugeben, mit denen in herstellungstechnisch einfacher und flexibler Weise unterschiedlichste Anforderungen im Betrieb bei hoher Betriebssicherheit erfüllt werden können.

Die Erfindung löst die Aufgabe durch die unabhängigen Ansprüche 1 und 17. Vorteilhafte Ausgestaltungen finden sich in den abhängigen Ansprüchen. Für einen Gewindeformer oder -bohrer der eingangs genannten Art löst der Anspruch 1 die Aufgabe dadurch, dass zumindest der Profilkörper schichtweise in einem 3D-Druckverfahren aufgebaut worden ist, wobei mindestens zwei aus unterschiedlichen Materialien bestehende Abschnitte des Profilkörpers erzeugt worden sind.

Mit dem erfindungsgemäßen Gewindeformer oder -bohrer kann insbesondere ein Innengewinde in einem Werkstück erzeugt werden. Gewindebohrer gehen von einer bolzenförmigen Grundform aus, wobei durch das Einbringen von insbesondere achsparallelen oder schrägen Spannuten Schneiden in der Umfangsfläche des Profilkörpers erzeugt werden, die in dem Werkstück spanend ein Gewinde erzeugen. Gewindeformer zur Herstellung von Innengewinden werden geometrisch ebenfalls von einem Bolzen hergeleitet. Sie erzeugen das Gewinde in dem Werkstück allerdings nicht durch Zerspanung, sondern nur durch Verdrängung des Werkstoffs. Dazu werden in die Umfangsfläche des Profilkörpers Drückkanten eingebracht, die im Zuge der Bearbeitung das gewünschte Gewinde in dem Werkstück erzeugen. Zwischen den Drückkanten können Schmiernuten vorgesehen sein. Der Schaftkörper weist einen Einspannabschnitt auf, mit dem er in eine entsprechende Werkzeugmaschine zum rotierenden Antreiben und gegebenenfalls Vorschieben eingespannt wird.

Erfindungsgemäß wird die dreidimensionale Drucktechnik (3D-Drucktechnik) genutzt, um zumindest den Profilkörper mit Abschnitten aus unterschiedlichen Materialien aufzubauen. Dadurch können unterschiedliche Abschnitte des Profilkörpers in herstellungstechnisch einfacher Weise optimal an die Anforderungen im Betrieb angepasst werden. Die Abschnitte aus den unterschiedlichen Materialien sind gemäß der 3D-Drucktechnik stoffschlüssig, einstückig miteinander verbunden. Damit besteht im Betrieb, anders als beispielsweise bei konventioneller Löttechnik, keine Gefahr eines Lösens dieser Abschnitte voneinander. Gleichzeitig bietet der 3D-Druck in einfacher Weise eine größtmögliche Flexibilität bei der Ausbildung der unterschiedlichen Abschnitte. Auch Hinterschnitte und andere Geometrien, die mit konventionellen Herstellungsmethoden nicht realisierbar sind, können erfindungsgemäß einfach umgesetzt werden.

An der Umfangsfläche des Profilkörpers können Schneiden oder Drückkanten zur Herstellung des gewünschten Gewindes an einem Werkstück vorgesehen sein. Diese können nachfolgend zu dem 3D-Druckverfahren beispielsweise durch Schleifen in den Profilkörper eingebracht worden sein. Das 3D-Druckverfahren kann also einen Profilkörperrohling erzeugen, in den anschließend die Schneiden oder Drückkanten eingearbeitet werden.

Der Profilkörper kann als separates Profilelement ausgebildet sein und mittels Befestigungsmitteln drehfest und insbesondere zentrisch und lösbar am Schaftkörper befestigt sein. Der Schaftkörper kann ebenfalls in einem 3D-Druckverfahren hergestellt worden sein. Er kann aber auch anderweitig hergestellt worden sein. Auch ist es natürlich möglich, dass der Schaftkörper und der Profilkörper einstückig in einem 3D-Druckverfahren hergestellt worden sind.

Nach einer weiteren Ausgestaltung kann der Profilkörper an seinem dem Schaftkörper abgewandten Ende einen Anlauf- oder Anschnittbereich besitzen, an den sich in Richtung des Schaftkörpers ein Führungsbereich anschließt, an den sich wiederum ein mit dem Schaftkörper verbundener Anschlussbereich anschließt. Dieser Aufbau eines Profilkörpers ist an sich bekannt. Bekanntlich besitzen derartige Profilkörper beispielsweise eine im Wesentlichen zylindrische Grundform. Der Profilkörper kann sich auch über seine gesamte axiale Ausdehnung oder nur abschnittsweise, beispielsweise nur im Anlauf- oder Anschnittbereich, in Richtung seines dem Schaftkörper abgewandten freien Endes konisch verjüngen. Der Anschlussbereich ist beispielsweise zur Verbindung mit dem Schaftkörper vorgesehen. Er kann Formschlusselemente umfassen, die im mit dem Schaftkörper verbundenen Zustand formschlüssig in korrespondierende Formschlusselemente des Schaftkörpers eingreifen. Dadurch wird die Drehmomentübertragung im Betrieb und drehfeste Verbindung zwischen den beiden Teilen sichergestellt. Zur Befestigung des Profilkörpers an dem Schaftkörper kommt beispielsweise eine Schraubverbindung in Frage.

Der Anlauf- oder Anschnittbereich kann aus einem anderen Material bestehen als der Führungsbereich und/oder als der Anschlussbereich. Auch kann der Führungsbereich aus einem anderen Material bestehen als der Anschlussbereich und/oder als der Anlauf- oder Anschnittbereich. Durch geeignete Wahl der Materialien für die unterschiedlichen Bereiche des Profilkörpers kann dieser optimal an die Anforderungen im Betrieb angepasst werden.

Der Anlauf- oder Anschnittbereich kann aus einem verschleißfesteren Material bestehen als der Führungsbereich und der Anschlussbereich. Beispielsweise kann der Anlauf- oder Anschnittbereich aus einem Hartmetall (HM), einem Schnellarbeitsstahl (HSS) oder einem Keramikwerkstoff bestehen. Der Führungsbereich kann beispielsweise aus einem Hartmetall (HM) oder Schnellarbeitsstahl (HSS) bestehen. Bei Schnellarbeitsstahl (HSS) handelt es sich um ein Material mit gegenüber einem Hartmetall geringerer Härte und größerer Zähigkeit. Der Anschlussbereich kann aus einem wiederum zäheren Material bestehen als der Führungsbereich und der Anlauf- oder Anschnittbereich, beispielsweise einem Werkzeugstahl. Ein solches Material mit hoher Oberflächenhärte dient besonders zur Übertragung hoher Drehmomente.

Es ist auch möglich, dass der Anlauf- oder Anschnittbereich, der Führungsbereich und der Anschlussbereich jeweils aus unterschiedlichen Hartmetallen bestehen. Insbesondere kann der Anlauf- oder Anschnittbereich aus einem Hartmetall mit einem niedrigeren Co-Gehalt bestehen als der Führungsbereich und der Führungsbereich kann aus einem Hartmetall mit einem niedrigeren Co-Gehalt bestehen als der Anschlussbereich. Mit steigendem Co-Gehalt erhöht sich die Bruchzähigkeit. Beispielhaft genannt sei ein Co-Gehalt von 6 % bis 8 % für den Anlauf- oder Anschnittbereich, ein Co-Gehalt von > 8 % bis 10 % für den Führungsbereich und ein Co-Gehalt von > 10 % bis 12 % für den Anschlussbereich. Alle Gehaltsangaben im Zusammenhang dieser Patentanmeldung verstehen sich in Gewichtsprozent.

Alternativ oder zusätzlich ist es auch möglich, dass der Anlauf- oder Anschnittbereich aus einem Hartmetall mit einer geringeren Korngröße besteht als der Führungsbereich und der Führungsbereich aus einem Hartmetall mit einer geringeren Korngröße besteht als der Anschlussbereich. Beispielhaft genannt seien eine Korngröße von mindestens 0,1 µm für den Anlauf- oder Anschnittbereich, eine Korngröße von mindestens 0,4 µm für den Führungsbereich und eine Korngröße von mindestens 0,6 µm für den Anschlussbereich. Auch mit steigender Korngröße erhöht sich die Bruchzähigkeit.

Nach einer weiteren Ausgestaltung kann die Umfangsfläche des Profilkörpers zumindest abschnittsweise aus einem anderen Material bestehen als das Innere des Profilkörpers. Beispielsweise können an der Außenfläche mehrere Stegabschnitte oder mindestens ein die Umfangsfläche des Profilkörpers ringförmig umschließender Mantel aus einem anderen Material als das Innere des Profilkörpers vorgesehen sein. Die Stege werden dort vorgesehen, wo nach dem Ausbilden der Schneiden oder Drückkanten im Betrieb besonders belastete Abschnitte vorliegen. Alternativ kann beispielsweise die gesamte Umfangsfläche des wie erwähnt beispielsweise zylindrischen Grundkörpers des Profilkörpers mit einem Mantel aus einem anderen Material bedeckt werden.

Das abschnittsweise an der Umfangsfläche vorgesehene Material kann ein verschleißfesteres Material sein als das übrige Material des Profilkörpers. Beispielsweise kann das abschnittsweise an der Umfangsfläche vorgesehene Material ein Hartmetall (HM), ein Schnellarbeitsstahl (HSS) oder ein Keramikwerkstoff sein. Das Innere des Profilkörpers kann aus einem zäheren und druckfesteren Material bestehen als das abschnittsweise an der Umfangsfläche vorgesehene Material, um hohen Kräften Stand zu halten.

Nach einer weiteren Ausgestaltung kann zumindest der Profilkörper mit einer Hartstoffschicht beschichtet sein, vorzugsweise hergestellt in einem CVD-Verfahren oder einem PVD-Verfahren. Der Gegenstand des Anspruchs 17 löst die Aufgabe außerdem durch ein Verfahren zur Herstellung eines erfindungsgemäßen Gewindeformers oder -bohrers, bei dem zumindest der Profilkörper in einem 3D-Druckverfahren hergestellt wird, indem in einer Form Material schichtweise ausgebracht und durch selektives Aufschmelzen oder Sintern des ausgebrachten Materials zumindest der Profilkörper des Gewindeformers oder - bohrers aufgebaut wird, wobei durch Ausbringen und Aufschmelzen oder Sintern mindestens zweier unterschiedlicher Materialien mindestens zwei Abschnitte des Profilkörpers aus unterschiedlichen Materialien erzeugt werden.

Das insbesondere pulverförmige Material wird für den 3D-Druck schichtweise in eine Form ausgebracht. Bei dem Material kann es sich insbesondere um einen Metallwerkstoff oder einen Keramikwerkstoff handeln. Das selektive Aufschmelzen oder Sintern des Materials zum Bilden der gewünschten dreidimensionalen Form kann beispielsweise ein selektives Laserschmelzen oder selektives Lasersintern sein. Es erfolgt also ein schichtweiser Aufbau zumindest des Profilkörpers bzw. Profilkörperrohlings des Gewindeformers oder -bohrers.

Auch der Schaftkörper des Gewindeformers oder -bohrers kann in dem 3D-Druckverfahren hergestellt werden. Es kann dann insbesondere der gesamte Gewindeformer oder-bohrer durch dieses 3D-Druckverfahren aufgebaut werden, wobei anschließend lediglich noch die Schneiden oder Drückkanten in die Umfangsfläche des Profilkörpers eingebracht werden. Es ist jedoch auch denkbar, dass der Schaftkörper separat, beispielsweise anderweitig hergestellt wird und anschließend mit dem im 3D-Druckverfahern hergestellten Profilkörper verbunden wird.

Wie bereits erläutert, können anschließend zu dem 3D-Druckverfahren Schneiden oder Drückkanten zum Erzeugen eines Gewindes in einem Werkstück in die Umfangsfläche des Profilkörpers des Gewindeformers oder -bohrers eingearbeitet werden, insbesondere durch Schleifen.

Ausführungsbeispiele der Erfindung werden nachfolgend anhand von Zeichnungen näher erläutert. Es zeigen schematisch:
- Fig. 1: eine Seitenansicht eines Profilkörpers eines erfindungsgemäßen Gewindeformers nach einem ersten Ausführungsbeispiel,
- Fig. 2: eine Schnittansicht entlang der Linie 2-2 in Fig. 1,
- Fig. 3: eine Seitenansicht eines Profilkörperrohlings eines erfindungsgemäßen Gewindeformers nach einem zweiten Ausführungsbeispiel,
- Fig. 4: eine Schnittansicht entlang der Linie 4-4 in Fig. 3, und
- Fig. 5: eine Ansicht von vorne auf den in Figuren 3 und 4 gezeigten Profilkörperrohling nach Ausbilden von Drückkanten an der Umfangsfläche des Profilkörperrohlings.

Soweit nichts anderes angegeben ist, bezeichnen in den Figuren gleiche Bezugszeichen gleiche Gegenstände.

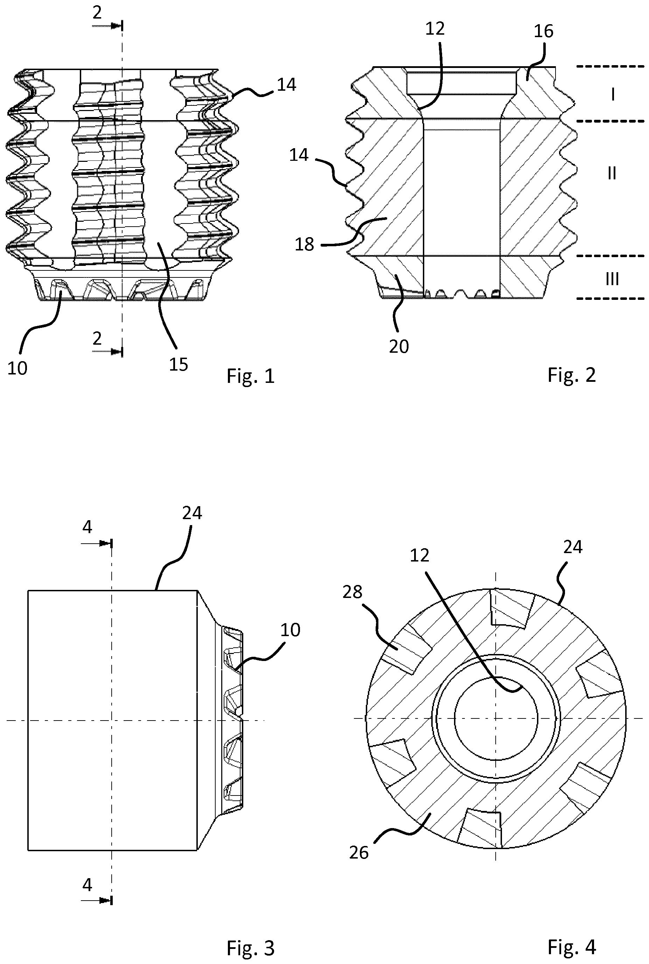

Der in den Figuren 1 und 2 gezeigte Profilkörper eines erfindungsgemäßen Gewindeformers dient zum Erzeugen eines Innengewindes in einem Werkstück. Er besitzt einen zylindrischen Grundkörper, der sich in Axialrichtung in drei Bereiche einteilen lässt. Ein erster Bereich I ist ein Anlauf- oder Anschnittbereich. Ein zweiter Bereich II ist ein Führungsbereich und ein dritter Bereich III ist ein Anschlussbereich. Der Anschlussbereich III dient zum Anschluss an einen in den Figuren nicht dargestellten, beispielsweise zylindrischem Schaftkörper. Dazu weist der Anschlussbereich III an seinem in den Figuren 1 und 2 unteren Ende eine Mehrzahl von Formschlusselementen 10 auf, die in korrespondierende Formschlusselemente eines Endes des Schaftkörpers eingreifen und so eine drehfeste Verbindung gewährleisten. Durch nicht näher dargestellte Befestigungsmittel, von denen lediglich eine Durchgangsöffnung 12 für einen Schraubenbolzen erkennbar ist, wird der Profilkörper mit dem Schaftkörper lösbar verbunden. An seinem dem Profilkörper abgewandten Ende weist der Schaftkörper einen Einspannabschnitt auf, mit dem er in eine Werkzeugmaschine zur Bearbeitung eingespannt werden kann.

An seiner Umfangsfläche besitzt der Profilkörper insbesondere in dem Anlauf- oder Anschnittbereich I und dem Führungsbereich II in an sich bekannter Weise eine Mehrzahl von Gewindedrückkanten 14. Diese dienen im Betrieb in an sich bekannter Weise zum Ausbilden eines Innengewindes an einem Werkstück. Zwischen benachbarten Gewindedrückkanten 14 können in an sich bekannter Weise Schmiernuten 15 ausgebildet sein. In den Figuren ist außerdem zu erkennen, dass sich der Profilkörper mit den Gewindedrückkanten 14 insbesondere im Bereich des Anlauf- oder Anschnittsbereichs I in Richtung seines dem Schaftkörper abgewandten freien Endes (in den Figuren 1 und 2 nach oben) konisch verjüngt.

In dem dargestellten Beispiel bestehen der Anlauf- oder Anschnittbereich I, der Führungsbereich II und der Anschlussbereich III aus unterschiedlichen Materialien. Der Anlauf- oder Anschnittbereich I kann aus einem besonders verschleißfesten Material 16 bestehen, beispielsweise einem Hartmetall, einem Schnellarbeitsstahl oder einem Keramikwerkstoff. Der Führungsbereich II kann beispielsweise aus einem Material 18 geringerer Härte und größerer Zähigkeit als das Material 16 des Anlauf- oder Anschnittbereichs I bestehen, beispielsweise einem Schnellarbeitsstahl oder einem Hartmetall mit größerem Co-Gehalt und/oder größerer Korngröße. Der Anschlussbereich III kann aus einem wiederum gegenüber dem Material 18 des Führungsbereich II zäheren Material 20 mit hoher Oberflächenhärte zur Übertragung großer Drehmomente bestehen, beispielsweise einem Werkzeugstahl oder einem Hartmetall mit weiter größerem Co-Gehalt und/oder weiter größerer Korngröße.

Der in den Figuren 1 und 2 gezeigte Profilkörper wurde durch ein 3D-Druckverfahren aufgebaut, bei dem in einer Form die unterschiedlichen für die Abschnitte I, II und III verwendeten Materialien schichtweise pulverförmig ausgebracht wurden und durch selektives Aufschmelzen oder Sintern ein Profilkörperrohling erzeugt wurde. Die Gewindedrückkanten 14 wurden anschließend in den Profilkörperrohling eingebracht, beispielsweise durch Schleifen. Der Schaftkörper kann ebenfalls durch ein 3D-Druckverfahren oder anderweitig hergestellt worden sein.

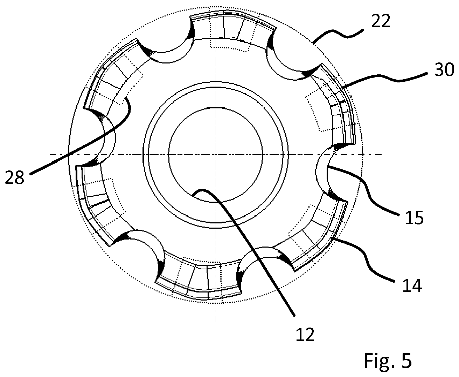

In den Figuren 3 bis 5 ist ein zweites Ausführungsbeispiel eines Profilkörpers eines erfindungsgemäßen Gewindeformers dargestellt. Dabei ist in den Figuren 3 und 4 der in dem oben erläuterten 3D-Druckverfahren hergestellte Profilkörperrohling gezeigt, in dem noch keine Gewindedrückkanten ausgebildet sind. In Fig. 5 sind dagegen die nachfolgend zu dem 3D-Druckverfahren beispielsweise durch Schleifen eingebrachten Gewindedrückkanten 14 gezeigt. Bei dem Bezugszeichen 22 ist in Fig. 5 aus Veranschaulichungsgründen gestrichelt die ursprüngliche Form des Profilkörperrohlings gezeigt.

Der in den Figuren 3 bis 5 gezeigte Profilkörperrohling besitzt wiederum einen Anschlussbereich mit Formschlusselementen 10, mit denen er in korrespondierende Formschlusselemente eines wiederum nicht gezeigten Schaftkörpers eingreift. Der Schaftkörper und die Verbindung mit dem Profilkörper können ausgestaltet sein, wie oben zu dem Ausführungsbeispiel der Figuren 1 und 2 erläutert.

In Fig. 3 ist außerdem zu erkennen, dass der Profilkörperrohling eine zylindrische Umfangsfläche 24 besitzt. In der Schnittansicht der Fig. 4 ist zu sehen, dass der Profilkörperrohling Abschnitte aus unterschiedlichen Materialien besitzt. Der überwiegende Teil des Profilkörperrohlings, insbesondere sein Innenbereich, ist aus einem besonders zähen und druckfesten Material 26 gebildet, das im Betrieb hohen Kräften standhält, beispielsweise einem Werkzeugstahl. Insbesondere in der Schnittansicht der Fig. 4 ist zu erkennen, dass an der Umfangsfläche 24 des Profilkörperrohlings mehrere in Axialrichtung des Profilkörperrohlings verlaufende Stegabschnitte 28 ausgebildet sind, die aus einem anderen Material als der übrige Profilkörperrohling bestehen, insbesondere aus einem besonders verschleißfesten Material, wie Hartmetall, Schnellarbeitsstahl oder Keramikwerkstoff. In Fig. 5 sind die Stegabschnitte 28 zur Veranschaulichung gestrichelt dargestellt.

Zur Herstellung wird der in den Figuren 3 und 4 gezeigte Profilkörperrohling in einem 3D-Druckverfahren erzeugt, wie grundsätzlich oben zu dem Ausführungsbeispiel der Figuren 1 und 2 erläutert. Dabei wird in dem die Stegabschnitte 28 bildenden Bereich jeweils das verschleißfeste Material aufgeschmolzen, während im übrigen Bereich des Profilkörperrohlings das weniger verschleißfeste Material 26 aufgeschmolzen wird. Nach dem Aufbau des Profilkörperrohlings in dem 3D-Druckverfahren werden die Gewindedrückkanten 14 eingebracht zur Erzeugung der in Fig. 5 gezeigten Form. Erkennbar ist, dass die im Betrieb einem besonders starken Verschleiß unterliegenden Bereiche 30 durch das verschleißfestere Material der Stegabschnitte 28 gebildet sind.

Obgleich die Erfindung in den Figuren anhand eines Gewindeformers erläutert wurde, können die beschriebenen Ausgestaltungen in entsprechender Weise auch bei einem Gewindebohrer vorgesehen sein.

## Patentansprüche

1. Gewindeformer oder -bohrer, umfassend einen Schaftkörper, der an seinem einen Ende einen Einspannabschnitt und an seinem anderen Ende einen Profilkörper zum Formen oder Schneiden eines Gewindes aufweist, **dadurch gekennzeichnet, dass** zumindest der Profilkörper schichtweise in einem 3D-Druckverfahren aufgebaut worden ist, wobei mindestens zwei aus unterschiedlichen Materialien (16, 18, 20, 26, 28) bestehende Abschnitte des Profilkörpers erzeugt worden sind.

2. Gewindeformer oder -bohrer nach Anspruch 1, **dadurch gekennzeichnet, dass** der Profilkörper als separates Profilelement ausgebildet ist und mittels Befestigungsmitteln drehfest am Schaftkörper befestigt ist.

3. Gewindeformer oder -bohrer nach einem der Ansprüche 1 oder 2, **dadurch gekennzeichnet, dass** der Profilkörper an seinem dem Schaftkörper abgewandten Ende einen Anlauf- oder Anschnittbereich (I) besitzt, an den sich in Richtung des Schaftkörpers ein Führungsbereich (II) anschließt, an den sich wiederum ein mit dem Schaftkörper verbundener Anschlussbereich (III) anschließt.

4. Gewindeformer oder -bohrer nach Anspruch 3, **dadurch gekennzeichnet, dass** der Anlauf- oder Anschnittbereich (I) und/oder der Führungsbereich (II) und/oder der Anschlussbereich (III) aus unterschiedlichen Materialien bestehen.

5. Gewindeformer oder -bohrer nach einem der Ansprüche 3 oder 4, **dadurch gekennzeichnet, dass** der Anlauf- oder Anschnittbereich (I) aus einem Hartmetall (HM), einem Schnellarbeitsstahl (HSS) oder einem Keramikwerkstoff besteht.

6. Gewindeformer oder -bohrer nach Anspruch 5, **dadurch gekennzeichnet, dass** der Anlauf- oder Anschnittbereich (I) aus einem Hartmetall mit einem Co-Gehalt von 6 % bis 8 % besteht.

7. Gewindeformer oder -bohrer nach einem der Ansprüche 5 oder 6, **dadurch gekennzeichnet, dass** der Anlauf- oder Anschnittbereich (I) aus einem Hartmetall mit einer Korngröße von mindestens 0,1 µm besteht.

8. Gewindeformer oder -bohrer nach einem der Ansprüche 3 bis 7, **dadurch gekennzeichnet, dass** der Führungsbereich (II) aus einem Hartmetall (HM) oder einem Schnellarbeitsstahl (HSS) besteht.

9. Gewindeformer oder -bohrer nach Anspruch 8, **dadurch gekennzeichnet, dass** der Führungsbereich (II) aus einem Hartmetall mit einem Co-Gehalt von mehr als 8 % bis 10 % besteht.

10. Gewindeformer oder -bohrer nach einem der Ansprüche 8 oder 9, **dadurch gekennzeichnet, dass** der Führungsbereich (II) aus einem Hartmetall mit einer Korngröße von mindestens 0,4 µm besteht.

11. Gewindeformer oder -bohrer nach einem der Ansprüche 3 bis 10, **dadurch gekennzeichnet, dass** der Anschlussbereich (III) aus einem Hartmetall mit einem Co-Gehalt von mehr als 10 % bis 12 % besteht.

12. Gewindeformer oder -bohrer nach einem der Ansprüche 3 bis 11, **dadurch gekennzeichnet, dass** der Anschlussbereich (III) aus einem Hartmetall mit einer Korngröße von mindestens 0,6 µm besteht.

13. Gewindeformer oder -bohrer nach einem der vorhergehenden Ansprüche, **dadurch gekennzeichnet, dass** die Außenfläche des Profilkörpers zumindest abschnittsweise aus einem anderen Material (28) besteht als das Innere des Profilkörpers.

14. Gewindeformer oder -bohrer nach Anspruch 13, **dadurch gekennzeichnet, dass** an der Umfangsfläche (24) mehrere Stegabschnitte (28) oder mindestens ein die Umfangsfläche (24) des Profilkörpers umschließender Mantel aus einem anderen Material als das Innere des Profilkörpers vorgesehen ist.

15. Gewindeformer oder -bohrer nach einem der Ansprüche 13 oder 14, **dadurch gekennzeichnet, dass** das abschnittsweise an der Außenfläche vorgesehene Material ein Hartmetall (HM), ein Schnellarbeitsstahl (HSS) oder ein Keramikwerkstoff ist.

16. Gewindeformer oder -bohrer nach einem der vorhergehenden Ansprüche, **dadurch gekennzeichnet, dass** zumindest der Profilkörper mit einer Hartstoffschicht beschichtet ist, vorzugsweise hergestellt in einem CVD-Verfahren oder einem PVD-Verfahren.

17. Verfahren zur Herstellung eines Gewindeformers oder -bohrers nach einem der vorhergehenden Ansprüche, bei dem zumindest der Profilkörper in einem 3D-Druckverfahren hergestellt wird, indem in einer Form Material schichtweise ausgebracht und durch selektives Aufschmelzen oder Sintern des ausgebrachten Materials zumindest der Profilkörper des Gewindeformers oder -bohrers aufgebaut wird, wobei durch Ausbringen und Aufschmelzen oder Sintern mindestens zweier unterschiedlicher Materialien (16, 18, 20, 26, 28) mindestens zwei Abschnitte des Profilkörpers aus unterschiedlichen Materialien (16, 18, 20, 26, 28) erzeugt werden.

18. Verfahren nach Anspruch 17, **dadurch gekennzeichnet, dass** auch der Schaftkörper des Gewindeformers oder -bohrers in dem 3D-Druckverfahren hergestellt wird.

19. Verfahren nach einem der Ansprüche 17 oder 18, **dadurch gekennzeichnet, dass** nach dem 3D-Druckverfahren Schneiden oder Drückkanten (14) zum Erzeugen eines Gewindes in einem Werkstück in die Umfangsfläche (24) des Profilkörpers des Gewindeformers oder -bohrers eingearbeitet werden, insbesondere eingeschliffen werden.

## Claims

1. A thread former or tap, comprising a shaft body which has a clamping portion on its one end and a profile body for forming or cutting a thread on its other end, **characterised in that** at least the profile body has been built layer by layer using a 3D-printing method, wherein at least two portions of the profile body consisting of different materials (16, 18, 20, 26, 28) have been made.

2. The thread former or tap according to claim 1, **characterised in that** the profile body is realized as a separate profile element and is torque-proof fastened on the shaft body by means of fastening means.

3. A thread former or tap according to one of the claims 1 or 2, **characterised in that** the profile body has a entry- or gate region (I) on its end facing away from the shaft body, which is followed by a guide region (II) in the direction of the shaft body, which is in turn followed by a connecting region (III) that is connected to the shaft body.

4. The thread former or tap according to claim 3, **characterised in that** the entry- or gate region (I) and/or the guide region (II) and/or the connecting region (III) consist of different materials.

5. A thread former or tap according to one of the claims 3 or 4, **characterised in that** the entry- or gate region (I) consists of a hard metal (HM), a high-speed steel (HSS) or a ceramic material.

6. The thread former or tap according to claim 5, **characterised in that** the entry- or gate region (I) consists of a hard metal with a Co-content of 6% to 8%.

7. A thread former or tap according to one of the claims 5 or 6, **characterised in that** the entry- or gate region (I) consists of a hard metal having a grain size of at least 0.1 µm.

8. A thread former or tap according to any one of the claims 3 to 7, **characterised in that** the guide region (II) consists of a hard metal (HM) or a high-speed steel (HSS)

9. The thread former or tap according to claim 8, **characterised in that** the guide region (II) consists of a hard metal with a Co-content of more than 8% to 10%.

10. A thread former or tap according to one of the claims 8 or 9, **characterised in that** the guide region (II) consists of a hard metal having a grain size of at least 0.4 µm.

11. A thread former or tap according to any one of the claims 3 to 10, **characterised in that** the connecting region (III) consists of a hard metal with a Co-content of more than 10% to 12%.

12. A thread former or tap according to any one of the claims 3 to 11, **characterised in that** the connecting region (III) consists of a hard metal having a grain size of at least 0.6 µm.

13. A thread former or tap according to any one of the preceding claims, **characterised in that** the outer surface of the profile body consists at least in portions of another material (28) than the interior of the profile body.

14. The thread former or tap according to claim 13, **characterised in that** several flat portions (28) or at least one envelope surrounding the peripheral surface (24) of the profile body made from another material than the interior of the profile body is/are provided on the peripheral surface (24).

15. A thread former or tap according to one of the claims 13 or 14, **characterised in that** the material which is provided in portions on the outer surface is a hard metal (HM), a high-speed steel (HSS) or a ceramic material.

16. A thread former or tap according to any one of the preceding claims, **characterised in that** at least the profile body is coated with a hard material layer, preferably made in a CVD-process or a PVD-process.

17. A method for producing a thread former or tap according to any one of the preceding claims, in which at least the profile body is made in a 3D-printing process by deploying material layer by layer in a mould, and at least the profile body of the thread former or tap is built by selective melting or sintering of the deployed material, wherein at least two portions of the profile body of different materials (16, 18, 20, 26, 28) are produced by deploying and melting or sintering at least two different materials (16, 18, 20, 26, 28).

18. The method according to claim 17, **characterised in that** even the shaft body of the thread former or tap is produced in the 3D-printing process.

19. A method according to one of the claims 17 or 18, **characterised in that** after the 3D-printing process, cutting edges or forming edges (14) for creating a thread in a work piece are worked into the peripheral surface (24) of the profile body of the thread former or tap, by grinding in particular.

## Revendications

1. Taraud à déformation de matière ou à perçage, comportant un corps de tige qui a une partie de serrage dans l'une extrémité et un corps profilé pour former ou tarauder un filet dans son autre extrémité, **caractérisé en ce qu'**au moins le corps profilé a été fait en couches successives utilisant un procédé d'impression 3D, dans lequel au moins deux parties du corps profilé ont été faites consistant de matériaux différents (16, 18, 20, 26, 28).

2. Taraud à déformation de matière ou à perçage selon la revendication 1, **caractérisé en ce que** le corps profilé est réalisé comme un élément profilé séparé et est fixé solidaire en rotation dans le corps de tige par des moyens de fixation.

3. Taraud à déformation de matière ou à perçage selon une des revendications 1 ou 2, **caractérisé en ce que** le corps profilé a une zone d'entrée ou de chanfrein (I) dans son extrémité opposée au corps de tige, après laquelle suit une zone de guidage (II) dans la direction du corps de tige, qui est à son tour suivie d'une zone de connexion (III) qui est reliée au corps de tige.

4. Taraud à déformation de matière ou à perçage selon la revendication 3, **caractérisé en ce que** la zone d'entrée ou de chanfrein (I) et/ou la zone de guidage (II) et/ou la zone de connexion (III) consistent de matériaux différents.

5. Taraud à déformation de matière ou à perçage selon une des revendications 3 ou 4, **caractérisé en ce que** la zone d'entrée ou de chanfrein (I) consiste d'un métal dur (HM), un acier à coupe rapide (HSS) ou un matériau céramique.

6. Taraud à déformation de matière ou à perçage selon la revendication 5, **caractérisé en ce que** la zone d'entrée ou de chanfrein (I) consiste d'un métal dur avec une tenue en cobalt de 6% à 8%.

7. Taraud à déformation de matière ou à perçage selon une des revendications 5 ou 6, **caractérisé en ce que** la zone d'entrée ou de chanfrein (I) consiste d'un métal dur avec une grosseur de grain d'au moins 0,1 µm.

8. Taraud à déformation de matière ou à perçage selon l'une quelconque des revendications 3 à 7, **caractérisé en ce que** la zone de guidage consiste d'un métal dur (HM) ou un acier à coupe rapide (HSS)

9. Taraud à déformation de matière ou à perçage selon la revendication 8, **caractérisé en ce que** la zone de guidage (II) consiste d'un métal dur avec une tenue en cobalt de plus que 8% à 10%.

10. Taraud à déformation de matière ou à perçage selon une des revendications 8 ou 9, **caractérisé en ce que** la zone de guidage (II) consiste d'un métal dur avec une grosseur de grain d'au moins 0,4 µm.

11. Taraud à déformation de matière ou à perçage selon l'une quelconque des revendications 3 à 10, **caractérisé en ce que** la zone de connexion (III) consiste d'un métal dur avec une tenue en cobalt de plus que 10% à 12%.

12. Taraud à déformation de matière ou à perçage selon l'une quelconque des revendications 3 à 11, **caractérisé en ce que** la zone de connexion (III) consiste d'un métal dur avec une grosseur de grain d'au moins 0,6 µm.

13. Taraud à déformation de matière ou à perçage selon l'une quelconque des revendications précédentes, **caractérisé en ce que** la surface extérieure du corps profilé consiste au moins en partie d'un autre matériau (28) que l'intérieur du corps profilé.

14. Taraud à déformation de matière ou à perçage selon la revendication 13, **caractérisé en ce que** sur la surface périphérique (24), plusieurs parties plates (28) ou au moins une enveloppe entourant la surface périphérique (24) du corps profilé est/sont prévu(s) d'un autre matériau que l'intérieur du corps profilé.

15. Taraud à déformation de matière ou à perçage selon une des revendications 13 ou 14, **caractérisé en ce que** le matériau prévu en parties sur la surface extérieure est un métal dur (HM), un acier à coupe rapide (HSS) ou un matériau céramique.

16. Taraud à déformation de matière ou à perçage selon l'une quelconque des revendications précédentes, **caractérisé en ce qu'**au moins le corps profilé est revêtu d'une couche de matériau dur, de préférence fait dans un procédé CVD ou un procédé PVD.

17. Procédé de production d'un taraud à déformation de matière ou à perçage selon l'une quelconque des revendications précédentes, dans lequel au moins le corps profilé est produit par un procédé d'impression 3D en apportant du matériau en couches successives dans une moule, et au moins le corps profilé du taraud à déformation de matière ou à perçage est fait par fusion ou frittage sélective du matériau apporté, au moins deux parties du corps profilé étant faites de matériaux différents (16, 18, 20, 26, 28) par apport et fusion ou frittage d'au moins deux matériaux différents (16, 18, 20, 26, 28).

18. Procédé selon la revendication 17, **caractérisé en ce que** même le corps de tige du taraud à déformation de matière ou à perçage est produit par le procédé d'impression 3D.

19. Procédé selon une des revendications 17 ou 18, **caractérisé en ce qu'**après le procédé d'impression 3D, des bords coupants ou bords d'appui (14) pour faire un filet dans une pièce à travailler sont réalisés dans la surface périphérique (24) du corps profilé du taraud à déformation de matière ou à perçage, notamment par meulage.
